# EUROPEAN PATENT SPECIFICATION

(11) **EP 2 351 627 B1**
(45) Date of publication and mention of the grant of the patent: **31.10.2012**
(21) Application number: 10191154.3
(22) Date of filing: 15.11.2010
(51) Int. Cl.: B23B 27/16

(54) **Clamping device for cutting inserts**
Klemmvorrichtung für Schneideinsätze
Dispositif de serrage pour des pastilles de coupe

(30) Priority: 13.11.2009 IT UD20090203
(43) Date of publication of application: 03.08.2011
(73) Proprietor: Antonelli, Alessandro, 61030 Calcinelli di Saltara (PU) (IT)
(72) Inventor: Antonelli, Alessandro, 61030 Calcinelli di Saltara (PU) (IT)
(74) Representative: Petraz, Gilberto Luigi

(56) References cited:
- WO-A1-01/78927
- LU-A1- 63 276
- US-A- 3 965 553
- US-B2- 7 347 650

## Description

### FIELD OF THE INVENTION

The present invention concerns a clamping device for mechanical attachment tools. In particular, the clamping device according to the present invention is used to clamp a mechanical attachment tool such as, preferably but not only, a cutting insert, on a tool-bearing head used particularly, but not exclusively, in precision mechanical workings.

### BACKGROUND OF THE INVENTION

A clamping device to clamp a cutting insert onto a tool-bearing head is known, used in precision mechanical workings, comprising a lever disposed inside a compartment made in correspondence with, and below, the support plane of the seating in which the cutting insert is able to be disposed. The lever is shaped so as to define a substantially L-shaped profile, in which the side of the profile facing upward, or vertical side, is inserted inside a through hole made preferably at the centre of the cutting insert.

In this way, the vertical side substantially achieves a coupling attachment with the cutting insert.

The lever cooperates with a screw, able to be screwed into a corresponding seating made on the tool-bearing head, which, after screwing, exerts pressure on the horizontal side of the profile. The force exerted by the screw determines an inclination of the lever such that the vertical side of the lever is raised, which consolidates the coupling attachment with the cutting insert and thrusts the latter close up to the walls of the seating in which it is positioned.

With this known clamping device there is a non-uniform distribution of the forces acting on the cutting insert, determining a lifting of the working top of the cutting insert with respect to the support plane of the seating in which it is positioned, thus determining a poorer quality of the work and frequent breakages when it is working, and consequent interruptions of the work to replace and calibrate it.

Another known clamping device comprises a first clamping screw inserted in a through hole by means of the tool to attach the latter to the support seating, and a second clamping screw inserted in a mating second cavity, made on the tool-bearing head, communicating with the first cavity, so as to cooperate with the first attachment screw and determine the clamping of the latter.

This known solution does not allow a univocal and precise positioning of the tool in the support seating either, with consequent operative disadvantages.

A tool-bearing device is known from the document US-A-3,965,553, to clamp a cutting insert in an insertion seating. The known device comprises a rotating pin completely inserted in a hole of the tool-bearing device, which pin has a lower threaded end which can be screwed to a clamping element disposed in a wider internal seating. The pin has a truncated-conical upper end which, when the pin is screwed, determines the sliding of the inclined walls of the truncated conical end along the hole in which the pin is inserted, thus obtaining both an axial advance and a slight inclination and rotation of the pin. This also makes the clamping element rotate, making it act as a lever which abuts against an upper wall of the wider internal seating, in order to clamp the cutting insert in its insertion seating. The known device, however, does not guarantee stability, reliability and precision in supporting the insert, in that the truncated conical end, having a diameter smaller than that of the hole, is completely inserted in the hole and the only guarantee of clamping, which in any case is reduced, is given by the tangential cooperation between the inclined walls of the truncated cone and the internal walls of the insertion hole. In this known device the pin has a wider intermediate collar configured to abut in a wider auxiliary internal seating, but this solution is not reliable in any case because, as a result of the rotation of the pin, the collar, which is consequently inclined, substantially abuts at a point of the auxiliary seating, and also represents a considerable complication in construction, with higher working costs.

Purpose of the present invention is to achieve a clamping device for mechanical attachment tools which allows a stable and secure clamping, allows a univocal and precise positioning of the tool inside the relative support seating, and which prevents frequent breakages or wear of the tool, drastically reducing interruptions in working due to replacement and calibration times of the tool.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a clamping device according to the present invention can be used to clamp a mechanical attachment tool, for example a cutting insert, on a tool-bearing head.

The tool-bearing head comprises a support seating in which the tool is able to be disposed, while the tool is provided with a through hole which develops along a relative longitudinal axis and disposed substantially, but not necessarily, in correspondence with its center.

Clamping means, for example a screw, comprising a drive portion, are able to be disposed through the through hole; the clamping means are able to act on the tool in a first attachment direction substantially aligned to the longitudinal axis, in order to consolidate the positioning of the tool in the support seating.

According to a characteristic feature of the present invention, the drive portion has a bigger transverse size than the biggest transverse size of the hole so as to stably abut on an upper external surface of the tool when the tool is clamped.

Moreover, the clamping means comprise at least a first portion able to be coaxially inserted in the hole and having a lateral surface with a substantially rectilinear development parallel to the axis so as to cooperate with the hole in order to stably guide the clamping means to act on the tool in the first attachment direction.

Furthermore, the clamping device comprises an anchoring member disposed in a relative cavity made inside the tool-bearing head and communicating with the support seating.

The anchoring member comprises at least a clamping seating inside which the clamping means are able to be operatively disposed, so as to determine the consolidation of the tool inside the support seating.

The anchoring member cooperates, by means of an external surface thereof, with a contrasting surface provided inside the chamber when the clamping means are driven in the first attachment direction.

The conformation of the clamping means, abutting, with on ample surface, on the upper part of the tool, and being guided into the hole in which they are housed, guarantees clamping stability and reliability. Moreover, the solution according to the present invention is more simple in construction and therefore less costly and laborious to make.

In some forms of embodiment, the external surface is made in a position substantially opposite to the clamping seating, with respect to the median line of the anchoring member, so that its cooperation with the contrasting surface generates a direct action on the clamping means so as to determine a consequent thrust on the tool in a second positioning direction different from the first attachment direction.

Advantageously, the second positioning direction is such as to induce the clamping means to thrust on the tool so as to make the latter adhere with precision to the surfaces of the support seating, correcting possible positioning errors.

In this way, the clamping means not only consolidate the positioning of the tool in the seating, but also contribute to the correct and precise positioning of the tool in the support seating, in an efficient and simple way.

With the clamping device for mechanical attachment tools according to the present invention, given that the clamping and positioning are carried out substantially by the same clamping means, a univocal and precise positioning of the tool inside the relative support seating is obtained, which increases the stability over time of the tool and therefore the precision in working.

Moreover, the position of the through hole substantially in correspondence with the center of the tool, as well as the clamping force of the clamping screw which acts on the upper surface of the tool, prevents the working top of the tool from lifting and, consequently, reduces to a minimum the risk of breakage and wear, drastically reducing the interruptions to work due to replacement and calibration times.

According to a variant, the anchoring member comprises a lever element, positioned inside the cavity of the tool-bearing head; the lever element comprises a clamping hole, for example threaded, for the clamping means, for example a screw, and cooperates with an external end surface, opposite the clamping hole, with the contrasting surface made in the shape of a step in the cavity.

In this way the lever element is substantially pivoted on the contrasting step, and so the progressive tightening of the clamping means determines a simultaneous rotation of the lever element around its fulcrum, with a consequent thrust of the tool, by means of the clamping means, close up to the surfaces of the support seating.

This solution is very simplified and allows to reach an optimal positioning in the support seating.

According to the invention the threads of the screw and of the clamping hole are configured to define a reciprocal play between clamping screw and anchoring member, in order to allow a lateral movement of the screw and to compensate possible rotations of the screw, avoiding the inclination thereof when the tool is thrust in the second positioning direction.

According to another variant, the anchoring member always comprises a lever element, but the contrasting surface is defined by thrusting means, for example with a screw, which are disposed through through a relative open positioning seating, on one side, toward the cavity, and on the other side, to the outside of the tool-bearing head, in a zone that does not interfere with the support seating.

In this way, the relative disposition of the thrust means with respect to the positioning seating determines an action on the lever element, which causes a movement of the clamping means, and therefore of the tool, in the second positioning direction.

With this variant solution, the positioning and clamping of the tool in the support seating occurs by means of the combined action of the clamping means and the thrust means, so as to guarantee that there is a greater precision in the positioning of the tool and that the positioning conditions reached by the tool in the support seating are maintained.

According to a first variant of this variant solution, the thrust means comprise a grub screw, advantageously with a flat end, which with its flat end acts as a contrasting surface for the external surface of the lever element. In this case, the progressive screwing of the grub screw in the positioning seating determines the thrust on the external surface of the lever element and the consequent direct action on the clamping means and on the tool.

In a second variant of this variant solution, the thrust means comprise a grub screw provided with an annular notch which is able to define the contrasting surface.

In this solution, the external surface of the lever element is shaped in a coordinated manner with the cross section of the annular notch, so as to be commanded by the grub screw in its rotation movement for the direct action on the clamping means and on the tool.

### BRIEF DESCRIPTION OF THE DRAWINGS

These and other characteristics of the present invention will become apparent from the following description of some preferential forms of embodiment, given as a non-restrictive example with reference to the attached drawings wherein:
- fig. 1 is an three-dimensional view of a mechanical attachment tool to which the clamping device according to the present invention is applied;
- fig. 2 is a lateral view in section of an enlarged detail of the clamping device in fig. 1;
- fig. 3 is a lateral view in section of an enlarged detail of a first variant of the clamping device in fig. 1;
- fig. 4 is a lateral view in section of an enlarged detail of a second variant of the clamping device in fig. 1.

To facilitate comprehension, the same reference numbers have been used, where possible, to identify common elements in the drawings that are substantially identical. It is understood that elements and characteristics of one form of embodiment can conveniently be incorporated into other forms of embodiment without further clarifications.

### DETAILED DESCRIPTION OF SOME PREFERENTIAL FORMS OF EMBODIMENT

With reference to the attached drawings, a clamping device 10 according to the present invention can be used to clamp a mechanical attachment tool, such as a cutting insert 11, on a tool-bearing head 12, used especially but not exclusively, in precision mechanical workings.

The tool-bearing head 12 comprises, at one of its ends, a support seating 13, delimited by two vertical walls and able to accommodate the cutting insert 11, having a shape substantially similar to the shape of the cutting insert 11 and defining a support plane P, on which the cutting insert 11 is able to be disposed and an abutment plane Q, consecutive and transverse to the support plane P. In this specific case, the support seating 13 is open at the front to allow the insertion, in a substantially tangential direction, of the cutting insert 11 and has the support P and abutment Q planes at the back.

The cutting insert 11 is provided in its central part with a through hole 15 which has its own longitudinal axis X.

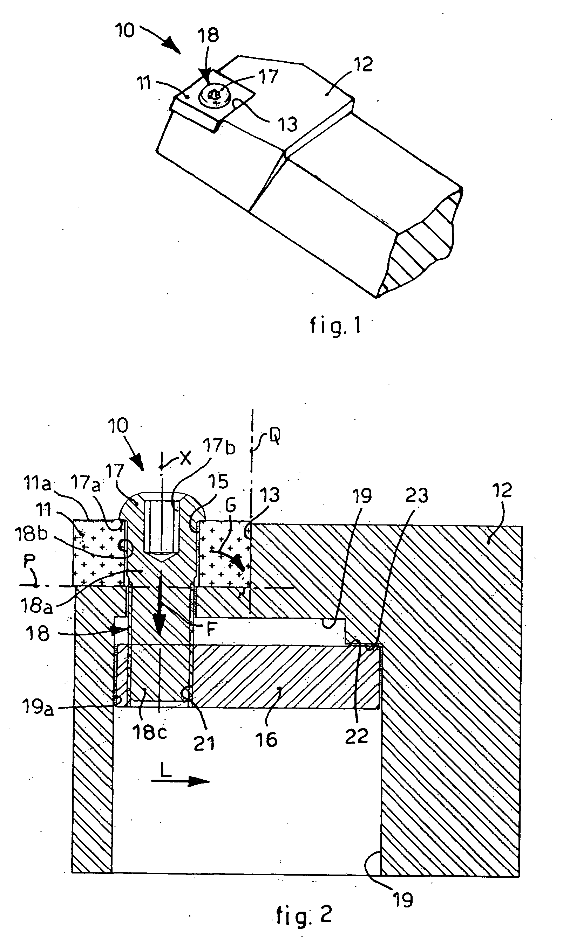

The clamping device 10 comprises a clamping screw 18, which has a drive head 17which has a bigger diameter than the diameter of the through hole 15. The clamping screw 18 is able to be coaxially inserted into the through hole 15, until it reaches a cavity 19 (fig.2) made in the tool-bearing head 12 below the support seating 13. The clamping screw 18 determines the clamping of the cutting insert 11, in a first attachment direction F substantially coincident with the longitudinal axis X, as will be explained in more detail hereafter.

Since the head 17 has a bigger diameter than the hole 15, defining a relative undercut 17a, consequently, when the clamping screw 18 reaches the cavity 19, it axially clamps the cutting insert 11, and the head 17 axially abuts on the upper external surface 11a of the cutting insert 11, guaranteeing an increased clamping stability in the direction of the first attachment direction F. Indeed the abutment of the head 17 will be continuous and uniform on an extended surface of the cutting insert 11, and not in a single abutment point.

In particular, the undercut 17a of the head 17 cooperates directly and in a continuous manner with an edge of the upper surface 11a which externally surrounds the hole 15.

The head 17 also has a seating 17b, in this case hexagonal, for the insertion of a relative drive tool to screw/unscrew the clamping screw 18.

The longitudinal axis X of the through hole 15 and the clamping screw 18 inserted in it is substantially orthogonal to the support plane P of the support seating 13.

Moreover, the clamping screw 18 is shaped to have at least a first portion 18a, in this case substantially cylindrical, which extends from the head 17 along the axis of the clamping screw 18.

The first portion 18a is able to be inserted coaxially in the hole 15 and has an external lateral surface 18b, with an axial-symmetrical and substantially rectilinear development, parallel to the longitudinal axis X, for example like the lateral surface of a cylinder, so as to cooperate with the hole 15, which has a mating shape, in order to guide the clamping screw in a linear and stable manner, to act on the cutting insert 11 in the first attachment direction F.

In this case, the clamping screw 18 also has a second portion 18c, which extends from the first portion 18a, with a threaded external lateral surface. The second portion 18c has a shape substantially corresponding to that of the first portion 18a and, in this case, has a smaller diameter, but it can also be of an equal size, defining as a whole a cylindrical body with constant section.

In the form of embodiment shown in figs. 1 and 2, the clamping device 10 comprises a lever plate 16 which acts as an anchoring member, which is disposed inside the cavity 19 with an orientation substantially parallel to the support plane P.

In particular, the lever plate 16 comprises a threaded hole 21 disposed substantially aligned with the longitudinal axis X of the through hole 15, so as to allow the clamping screw 18 to be screwed into it, in particular by screwing the second threaded portion 18c into the threaded hole 21. In this conformation, the clamping screw 18 is threaded through through the through hole 15, so as to cooperate with the cutting insert 11, and is screwed into the lever plate 16 in order to attach itself to it.

The lever plate 16 also comprises an external surface 22 substantially opposite to the threaded hole 21 and able to pivot with a contrasting surface 23 made in the shape of a step inside the cavity 19.

The progressive screwing of the screw 18 into the threaded hole 21 determines both the attachment of the cutting insert 11 in the support seating 13 in the attachment direction F, due to the effect of the action of the head 17 on the cutting insert 21, and also the rotation of the lever plate 16 on the side of the threaded hole 21 in a clockwise direction in a second positioning direction G, due to the effect of the fulcrum defined between the external surface 22 and the contrasting surface 23.

The reciprocal conformation of the threading of the second portion 18c and of the threaded hole 21 defines a relative play between clamping screw 18 and lever plate 16 which, as specified hereafter, allows the clamping screw 18 to move laterally so as to make the cutting insert 11 adhere to the support seating 13, by acting in the direction of the arrow L, but it prevents the rotation or inclination of the clamping screw 18 when the cutting insert 11 is thrust in the second positioning direction G.

Furthermore, the lever plate 16, pivoting with the contrasting surface 23 and rotating as described above, also abuts against an abutment surface 19a, provided on a vertical wall of the cavity 19 in a position opposite that of the contrasting surface 23, which prevents the lever plate 16 from turning back in the opposite direction of rotation once the clamping screw 18 has made the cutting insert 11 adhere to the support seating 13.

In particular the first portion 18a has transverse sizes and conformation such as to cooperate both tangentially and radially with the hole 15 in order to guide the lever plate 16 in a constrained manner in a substantially axial movement along the longitudinal axis X, in the case of the attached drawings upward, when the clamping screw 18 is driven in the first attachment direction F. The subsequent and consequent interference of the lever plate 16 against the external surface 22 determines the rotation of the lever plate 16 in the direction of the second positioning direction G and a consequent linear translation (arrow L) of the clamping screw 18 and therefore the movement of the cutting insert 11; however it does not determine any inclination thereof, thanks to the play between the threads of the second portion 18c and the threaded hole 21. This linear translation of the clamping screw 18, however, is contained by the reciprocal conformation of the clamping screw and hole 15, so it is sufficient to make the cutting insert 11 adhere to the internal surfaces of the support seating 13 in a desired manner, thus guaranteeing clamping stability and reliability. Moreover the fact that there is no inclination of the clamping screw 18, thanks to the aforementioned play of the threads, allows the head 17 to rest in abutment in a stable and substantially planar manner on the upper surface 11 a of the cutting insert 11.

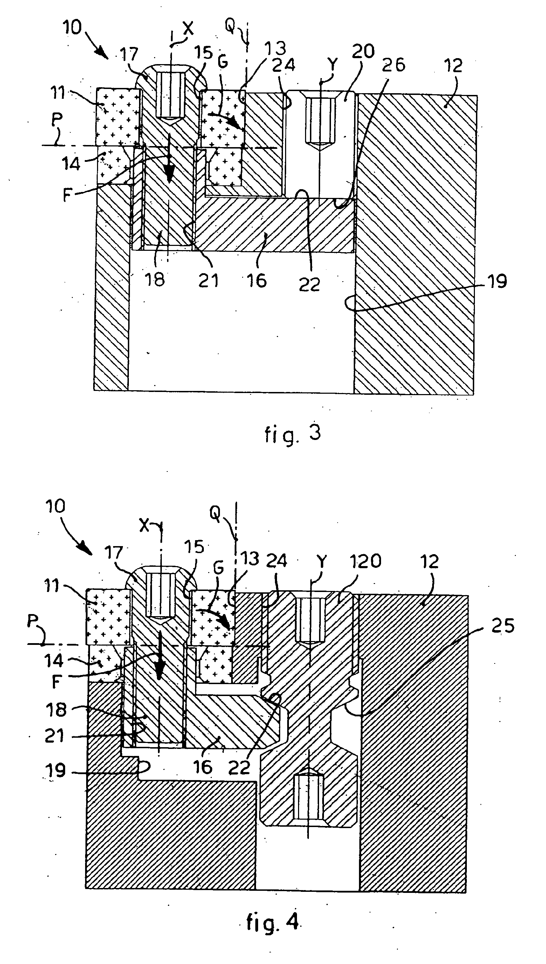

This combined action in the two directions F and G determines, at the same time and in a coordinated manner, both the attachment of the cutting insert 11 in the support seating 13, and also the positioning of the cutting insert 11 in a condition adherent with the internal surfaces of the support seating 13, in particular against the abutment plane Q. The action in the second positioning direction G in fact determines a corresponding direct movement on the clamping screw 18, which effects a thrust on the cutting insert 11 in order to take it into the desired positioning condition in the support seating 13. In the form of embodiment shown in fig. 3, a support plate 14 is disposed in the support seating 13, having a substantially similar shape to that of the support seating 13.

The attachment screw 18 is disposed through both through the cutting insert 11 and also through the support plate 13.

In this solution the clamping device 10 also comprises a thrust screw 20, such as a grub screw for example, inserted in a mating threaded positioning hole 24, made on one side of the tool-bearing head 12 and communicating with the cavity 19.

The longitudinal axis Y of the thrust screw 20 is in this case substantially parallel to the axis X and substantially orthogonal to the support plane P.

The thrust screw 20 is provided with a contrasting end 26, which faces the inside of the cavity 19 in correspondence with the external surface 22 of the lever plate 16, so that screwing the thrust screw 20 with respect to the threaded hole 24 determines a pressure on the external surface 22 of the lever plate 16.

In this solution the combined action in the directions F and G is given both by screwing the attachment screw 18, which always generates the action in the first attachment direction F, and by the thrust exerted by the thrust screw 20.

In this solution, it is therefore possible to carry out a better and more precise positioning of the cutting insert 11 with respect to the support seating 13, as well as to better guarantee over time that the position reached is maintained.

According to the form of embodiment shown in fig. 4, substantially equivalent to the variant shown in fig. 3, the thrust screw, in this case indicated with the reference number 120, comprises an annular notch 25 having a substantially trapezoidal cross section. In this case, the external surface 22 of the lever plate 16 is conformed complementary to the cross section of the annular notch 25, so that the annular notch 25 acts as a contrasting element.

In this solution the lever plate 16 is selectively commanded by the thrust screw 120 both in one direction and in the other, further improving the positioning conditions and precision of the cutting insert 11 in the support seating 13.

It is clear that modifications and/or additions of parts may be made to the clamping device 10 as described heretofore, without departing from the field and scope of the present invention.

It is also clear that, although the present invention has been described with reference to some specific examples, a person of skill in the art shall certainly be able to achieve many other equivalent forms of clamping device to clamp a mechanical attachment tool, having the characteristics as set forth in the claims and hence all coming within the field of protection defined thereby.

## Claims

1. Clamping device clamping a mechanical attachment tool (11) on a tool-bearing head (12) comprising a support seating (13) in which said tool (11) is able to be disposed, said device comprising a through hole (15) in said tool (11) and said tool-bearing head (12) which develops along a relative longitudinal axis (X) and screw clamping means (18) disposed through said through hole (15) and comprising a drive portion (17), said screw clamping means (18) are able to act on said tool (11) in a first attachment direction (F), substantially aligned to said longitudinal axis (X), in order to consolidate the positioning of said tool (11) in said support seating (13), said clamping device also comprising an anchoring member (16) disposed in a relative cavity (19) made inside said tool-bearing head (12) and communicating with said support seating (13), said anchoring member (16) being provided with at least a threaded clamping seating (21) inside which, during use, said screw clamping means (18) are disposed, and with an external surface (22) able to cooperate with a contrasting surface (23, 25, 26) provided inside said cavity (19) when said screw clamping means (18) are driven in said first attachment direction (F) **characterized in that** said drive portion is a head (17) having a bigger diameter than that of the through hole (15) defining an undercut (17a) in order to cooperate with and abut stably on an upper external surface (11a) of the tool (11) when said tool (11) is clamped, that said screw clamping means (18) comprise at least a first portion (8a) able to be coaxially inserted into the hole (15) and having a lateral surface (18b) with a substantially rectilinear development parallel to said axis (X) so as to cooperate with said hole (15) so as to stably guide the screw clamping means (18) in said first attachment direction (F), in order to act on said tool (11), and that the interference cooperation of the external surface (22) of the anchoring member (16) with the contrasting surface (23, 25, 26) determining the rotation of the anchoring member (16) in the direction of a second positioning direction (G) different from said first attachment direction (F) and a consequent linear translation along a lateral direction (L) of the screw clamping means (18) and therefore the movement of the tool (11), wherein the threading of the screw clamping means (18) and of the threaded clamping hole (21) are configured with reciprocal play in order to allow a lateral movement of the screw clamping means (18) during the rotation of the anchoring member (16) so as to make the tool (11) adhere to the support seating (13), in the lateral direction (L), preventing the rotation or inclination of the screw clamping means (18) when the tool (11) is thrust in the second positioning direction (G), so that the undercut (17a) of the head (17) rests in abutment in a stable and substantially planar manner on the upper external surface (11 a) of said tool (11) and the abutment of the undercut (17a) of the head (17) is continuous and uniform on an extended surface of the tool (11).

2. Device as in claim 1, **characterized in that** the external surface (22) of the anchoring member (16) is made in a substantially opposite position to the threaded clamping seating (21), with respect to the median line of said anchoring member (16).

3. Device as in claim 1 or 2, **characterized in that** the anchoring member comprises a lever element (16) positioned inside the cavity (19) of the tool-bearing head (12), said lever element (16) comprises a threaded clamping hole (21) for the screw clamping means (18) and cooperates, with an external end surface (22) thereof, with the contrasting surface (23) made inside the cavity (19).

4. Device as in any claim hereinbefore, **characterized in that** the anchoring member comprises a lever element (16), positioned inside the cavity (19) of the tool-bearing head (12), said lever element (16) comprises a threaded clamping hole (21), and the contrasting surface (23, 25) is defined by thrust means (20, 120) which are disposed through through a relative positioning seating (24) open on one side toward the cavity (19) and on the other side toward the outside of the tool-bearing head (12), in a zone that does not interfere with the support seating (13).

5. Device as in claim 4, **characterized in that** the thrust means comprise a grub screw (20), which with its flat end (26) acts as a contrasting surface for the external surface (22) of the lever element (16).

6. Device as in claim 4, **characterized in that** the thrust means comprise a grub screw (120) provided with an annular notch (25), said notch is able to define the contrasting surface and to cooperate with a coordinated external surface (22) of the lever element (16).

7. Device as in any claim hereinbefore, **characterized in that** the through hole (15) is made substantially in correspondence with the centre of said tool (11).

## Patentansprüche

1. Klemmvorrichtung, die ein mechanisches Befestigungswerkzeug (11) auf einem Werkzeug tragenden Kopf (12) klemmt, umfassend einen Haltesitz (13), in dem das Werkzeug (11) angeordnet sein kann, wobei die Vorrichtung aufweist eine Durchgangsbohrung (15) in dem Werkzeug (11) und dem Werkzeug haltenden Kopf (12), die zwischen einer relativen Längsachse (X) verläuft, sowie eine Schraubklemmeinrichtung (18), die durch die Durchgangsbohrung (15) angeordnet ist und einen Treibteil (17) aufweist, wobei die Schraubklemmeinrichtung (18) dazu in der Lage ist, in einer ersten Befestigungsrichtung (F), im Wesentlichen ausgerichtet auf die Längsachse (X), auf das Werkzeug (11) einzuwirken, um die Positionierung des Werkzeugs (11) in dem Haltesitz (13) zu sichern, wobei die Klemmvorrichtung ebenfalls ein Ankerelement (16) aufweist, das in einer relativen Ausnehmung (19) angeordnet ist, die innerhalb des Werkzeug tragenden Kopfes (12) ausgebildet ist und mit dem Haltesitz (13) kommuniziert, wobei das Ankerelement (16) mit zumindest einem mit einem Gewinde versehenen Klemmsitz (21) versehen ist, innerhalb dessen, während des Gebrauchs, die Schraubklemmvorrichtung (18) angeordnet ist, sowie mit einer externen Oberfläche (22), die dazu ausgelegt ist, mit einer innerhalb der Ausnehmung (19) vorgesehenen Gegenfläche (23, 25, 26) zusammenzuwirken, wenn die Schraubklemmeinrichtung (18) in der ersten Befestigungsrichtung (F) eingeführt wird, **dadurch gekennzeichnet, dass** der Treibbereich ein Kopf (17) ist mit einem größeren Durchmesser als derjenige der Durchgangsbohrung (15), der einen Hinterschnitt (17a) definiert, um mit einer oberen externen Oberfläche (11a) des Werkzeugs (11) zu kooperieren und stabil daran anzuliegen, wenn das Werkzeug (11) geklemmt ist, dass die Schraubklemmeinrichtung (18) zumindest einen ersten Bereich (18a) aufweist, der dazu in der Lage ist, koaxial in die Bohrung (15) eingefügt zu werden und eine seitliche Fläche (18b) aufweist, die im Wesentlichen rechtwinklig verläuft parallel zu der Achse (X), um mit der Bohrung (15) so zusammen zu wirken, dass die Schraubklemmeinrichtung (18) in der ersten Befestigungsrichtung (F) stabil geführt wird, um auf das Werkzeug (11) einzuwirken, wobei das Beeinflussungszusammenwirken der äußeren Oberflächen (22) des Ankerelements (16) mit der Gegenfläche (23, 25, 26) die Drehung des Ankerelements (16) in der Richtung der zweiten Positionierungsrichtung (G), verschieden von der ersten Befestigungsrichtung (F) und dementsprechend linear verlaufend längs einer seitlichen Richtung (L) der Schraubklemmeinrichtung (18) und daher die Bewegung des Werkzeugs (11) bestimmt, wobei das Gewinde der Schraubklemmeinrichtung (18) und der mit einem Gewinde versehenen Klemmbohrung (21) mit einem wechselseitigen Spiel konfiguriert sind, um eine seitliche Bewegung der Schraubklemmeinrichtung (18) während der Drehung des Ankerelements (16) zu erlauben, um es so möglich zu machen, dass das Werkzeug (11) an dem Haltesitz (13) haftet, in seitlicher Richtung (L), eine Rotation oder Neigung der Schraubklemmeinrichtung (18) vermieden wird, wenn das Werkzeug (11) in der zweiten Positionierungsrichtung (G) gedrückt wird, sodass der Hinterschnitt (17a) des Kopfes (17) anliegt in einer stabilen und im Wesentlichen ebenen Weise an der oberen äußeren Oberfläche (11a) des Werkzeugs (11) und die Anlage des Hinterschnitts (17a) des Kopfes (17) kontinuierlich und gleichförmig ist auf einer verlängerten Oberfläche des Werkzeugs (11).

2. Vorrichtung nach Anspruch 1, **dadurch gekennzeichnet, dass** die äußere Oberfläche (22) des Ankerelements (16) in im Wesentlichen entgegengesetzter Position zu dem geschraubten Klemmsitz (21), bezüglich der Medianlinie des Ankerelements (16), hergestellt ist.

3. Vorrichtung nach Anspruch 1 oder 2, **dadurch gekennzeichnet, dass** das Ankerelement ein Hebelelement (16) aufweist, das in der Ausnehmung (19) des Werkzeug tragenden Kopfes (12) positioniert ist, wobei das Hebelelement (16) eine mit einem Gewinde versehene Klemmbohrung (21) für die Schraubklemmeinrichtung (18) aufweist und zusammenwirkt mit einer äußeren Endfläche (22) hiervon, wobei die entgegengewandte Fläche (23) innerhalb der Ausnehmung (19) gefertigt ist.

4. Vorrichtung nach einem der vorstehenden Ansprüche, **dadurch gekennzeichnet, dass** das Ankerelement ein Hebelelement (16) aufweist, das innerhalb der Ausnehmung (19) des Werkzeug tragenden Kopfes (12) positioniert ist, wobei das Hebelelement (16) eine mit einem Gewinde versehene Klemmbohrung (21) aufweist und die Gegenfläche (23, 25) definiert wird durch Druckmittel (20, 120), die bereitgestellt sind durch einen relativen Positionierungssitz (24), der offen ist auf einer Seite zu der Vertiefung (19), und auf der anderen Seite zu der Außenseite des Werkzeug tragendem Kopfes (12) in einer Zone, die keine Auswirkung hat auf den Haltesitz (13).

5. Vorrichtung nach Anspruch 4, **dadurch gekennzeichnet, dass** die Druckmittel eine Madenschraube (20) umfassen, die mit ihrem flachen Ende (26) als eine Gegenfläche für die äußere Oberfläche (22) des Hebelelements (16) wirkt.

6. Vorrichtung nach Anspruch 4, **dadurch gekennzeichnet, dass** die Druckmittel eine Madenschraube (120) aufweisen, die mit einer ringförmigen Einkerbung (25) versehen ist, wobei die Einkerbung dazu in der Lage ist, die Gegenfläche zu definieren und zusammen zu wirken mit einer koordinierten äußeren Oberfläche (22) des Hebelelements (16).

7. Vorrichtung nach einem der vorstehenden Ansprüche, **dadurch gekennzeichnet, dass** die Durchgangsbohrung (15), im Wesentlichen ausgeführt ist in Übereinstimmung mit der Mitte des Werkzeugs (11).

## Revendications

1. Dispositif de serrage pour serrer un outil de fixation mécanique (11) sur une tête porte-outil (12) comprenant un logement de support (13) dans lequel ledit outil (11) est susceptible d'être disposé, ledit dispositif comprenant un trou traversant (15) dans ledit outil (11) et ladite tête porte-outil (12) qui se développe le long d'un axe longitudinal relatif (X) et des moyens de serrage à vis (18) disposés à travers ledit trou traversant (15) et comprenant une partie d'entraînement (17), lesdits moyens de serrage à vis (18) sont capables d'agir sur ledit outil (11) dans une première direction d'attache (F), sensiblement alignée sur ledit axe longitudinal (X), afin de consolider le positionnement dudit outil (11) dans ledit logement de support (13), ledit dispositif de serrage comprenant également un élément d'ancrage (16) disposé dans une cavité relative (19) réalisée à l'intérieur de ladite tête porte-outil (12) et communiquant avec ledit logement de support (13), ledit élément d'ancrage (16) étant pourvu d'au moins un logement de serrage fileté (21) à l'intérieur duquel, pendant l'utilisation, lesdits moyens de serrage à vis (18) sont disposés, et avec une surface externe (22) susceptible de coopérer avec une surface de contraste (23, 25, 26) agencée à l'intérieur de ladite cavité (19) lorsque lesdits moyens de serrage à vis (18) sont entraînés dans ladite première direction d'attache (F), **caractérisé en ce que** ladite partie d'entraînement est une tête (17) ayant un diamètre supérieur à celui du trou traversant (15) définissant une entaille (17a) afin de coopérer avec une surface externe supérieure (11 a) de l'outil (11) et de venir en butée de manière stable sur celle-ci lorsque ledit outil (11) est serré, **en ce que** lesdits moyens de serrage à vis (18) comprennent au moins une première partie (18a) susceptible d'être être insérée coaxialement dans le trou (15) et ayant une surface latérale (18b) avec un développement sensiblement rectiligne parallèle audit axe (X) de manière à coopérer avec ledit trou (15) de manière à guider de manière stable les moyens de serrage à vis (18) dans ladite première direction d'attache (F), afin d'agir sur ledit outil (11), la coopération d'interférence de la surface externe (22) de l'élément d'ancrage (16) avec la surface de contraste (23, 25, 26) déterminant la rotation de l'élément d'ancrage (16) dans la direction d'une seconde direction de positionnement (G) différente de ladite première direction d'attache (F) et une translation linéaire résultante le long d'une direction latérale (L) des moyens de serrage à vis (18) et par conséquent le mouvement de l'outil (11), dans lequel le filetage des moyens de serrage à vis (18) et du trou de serrage fileté (21) est configuré avec un jeu réciproque afin de permettre un mouvement latéral des moyens de serrage à vis (18) pendant la rotation de l'élément d'ancrage (16) de manière à amener l'outil (11) à adhérer au logement de support (13), dans la direction latérale (L), empêchant la rotation ou l'inclinaison des moyens de serrage à vis (18) lorsque l'outil (11) est enfoncé dans la seconde direction de positionnement (G), de sorte que l'entaille (17a) de la tête (17) repose en butée d'une manière stable et sensiblement plane sur la surface externe supérieure (11a) dudit outil (11) et la butée de l'entaille (17a) de la tête (17) est continue et uniforme sur une surface étendue de l'outil (11).

2. Dispositif selon la revendication 1, **caractérisé en ce que** la surface extérieure (22) de l'élément d'ancrage (16) est réalisée dans une position sensiblement opposée au logement de serrage fileté (21), par rapport à la ligne médiane dudit élément d'ancrage (16) .

3. Dispositif selon la revendication 1 ou 2, **caractérisé en ce que** l'élément d'ancrage comprend un élément de levier (16) positionné à l'intérieur de la cavité (19) de la tête porte-outil (12), ledit élément de levier (16) comprend un trou de serrage fileté (21) pour les moyens de serrage à vis (18) et coopère, avec une surface d'extrémité extérieure (22) correspondante, la surface de contraste (23) étant réalisée à l'intérieur de la cavité (19).

4. Dispositif selon l'une quelconque des revendications précédentes, **caractérisé en ce que** l'élément de serrage comprend un élément de levier (16), positionné à l'intérieur de la cavité (19) de la tête porte-outil (12), ledit élément de levier (16) comprend un trou de serrage fileté (21) et la surface de contraste (23, 25) est définie par des moyens de poussée (20, 120) lesquels sont disposés à travers un logement de positionnement relatif (24) ouvert sur un côté en direction de la cavité (19) et sur l'autre côté en direction de l'extérieur de la tête porte-outil, dans une zone qui n'interfère pas avec le logement de support (13).

5. Dispositif selon la revendication 4, **caractérisé en ce que** les moyens de poussée comprennent une vis sans tête (20), laquelle avec son extrémité plate (23) agit comme une surface de contraste pour la surface externe (22) de l'élément de levier (16).

6. Dispositif selon la revendication 6, **caractérisé en ce que** les moyens de poussée comprennent une vis sans tête (120) pourvue d'une encoche annulaire (25), ladite encoche étant capable de définir la surface de contraste et de coopérer avec une surface externe coordonnée (22) de l'élément de levier (16).

7. Dispositif selon l'une quelconque des revendications précédentes, **caractérisé en ce que** le trou traversant (15) est réalisé sensiblement en correspondance avec le centre dudit outil (11).
